# EUROPÄISCHE PATENTANMELDUNG

(11) **EP 4 505 876 A1**
(43) Veröffentlichungstag der Anmeldung: **12.02.2025**
(21) Anmeldenummer: 24020253.1
(22) Anmeldetag: 02.08.2024
(51) Int. Cl.: A23K 10/12, A23K 10/37, A23K 30/20, A23K 50/10, C12F 3/06

(54) **VERFAHREN FÜR HALTBARMACHUNG VON TREBER ALS FUTTERMITTEL**

(30) Priorität: 08.08.2023 AT 942023
(71) Anmelder: Riegler, Daniel, 3353 Biberbach (AT)
(72) Erfinder: Riegler, Daniel, 3353 Biberbach (AT)

(57) **Zusammenfassung**

Die Erfindung betrifft ein Verfahren für Haltbarmachung von Treber (3) als Futtermittel, wobei der Treber (3) aus der Bierproduktion und/oder aus der Produktion von Bioethanol aus Getreide stammt, wobei Wassergehalt des Trebers (3) durch einen Pressvorgang verringert wird und der Treber (3) in einer geschlossenen Umhüllung aus luftdichtem Umhüllungsmaterial (10) einer Milchsäuregärung unterzogen wird. Der Treber (3) wird in der Form eines kompakten monolithischen Körpers der durch Pressdruck gebildet wurde mit der Umhüllung versehen.

## Beschreibung

Die Erfindung betrifft ein Verfahren für Haltbarmachung von Treber als Futtermittel, wobei der Treber aus der Bierproduktion und/oder aus der Produktion von Bioethanol aus Getreide stammt.

Der bei besagten Produktionen anfallende Treber besteht im Wesentlichen aus Rückständen von Getreidekörnern und Wasser. Es fallen beträchtliche Mengen davon an, und es besteht daher schon lange großes Interesse daran, ihn nicht einfach nur loszuwerden, sondern Wertschöpfung damit zu erzielen. Mengenmäßig relevant dazu sind die Kompostierung, die thermische Verwertung und die Verwendung als Tierfutter. Die Verwertung als Tierfutter hat mit der Herausforderung umzugehen, dass unbehandelter Treber nur sehr kurz haltbar ist, und überwiegend nur dann anfällt wenn ohnedies genügend Grünfutter vorhanden ist, sodass sich oftmals schon der Transport zu den Tieren wirtschaftlich nicht rechnet.

Ein häufiger Ansatz dazu, den Treber als Futtermittel besser haltbar und handhabbar zu machen, besteht darin, ihn mit Substanzen zu vermischen die die Haltbarkeit verlängern und als Lebensmittel nicht schaden, ihn zu trocknen und zu verdichten, und letztendlich Pellets oder Flocken zu bilden, welche als Mischfutter in Form von Schüttgut ausgeliefert werden. Hinzukommende Substanzen sind beispielsweise verschiedene konservierend wirkende Salze, Säuren, Stroh. Das Trocknen kann entweder nur durch Pressen oder durch eine Folge aus Pressen und thermischer Einwirkung geschehen. Das Pressen erfolgt bevorzugt in kontinuierlich arbeitenden Schneckenpressen. Literaturbeispiele dazu sind die DE 2042514 A1, DE 2147775 A1, EP 0701778 A2, DE 2737295 C2, DE 2643093 C3, AT 354234 B, EP 0609548 A2, DE 2403203 B2 und die DE 4019190 C1.

Mit diesen Verfahren wird zwar verbesserte Haltbarkeit erreicht, aber das Futtermittel wird wegen der Zusatzstoffe und der vielen Verarbeitungsschritte auch erheblich verteuert, sodass diese Methoden nur unter sehr guten sonstigen Rahmenbedingungen und nur für einen sehr kleinen Anteil des anfallenden Trebers wirtschaftlich sinnvoll anwendbar sind.

In der DE 1692494 A1 wird vorgeschlagen den Treber durch mechanische Verfahren wie Pressen oder Zentrifugieren von einem Großteil seines flüssigen Anteils zu befreien, und ihn dann als Granulat luftdicht zu verpacken, beispielsweise in Kunststofftanks. Durch die dann startende Milchsäuregärung (welche auch beim üblichen Silieren von Grünfutter stattfindet) werde die Haltbarkeit des Treber deutlich verlängert. Optional wird vorgeschlagen Zusätze zuzugeben, welche die Milchsäuregärung beschleunigen, oder unmittelbar konservierend wirken - wie z.B. Futterkalk oder Ameisensäure.

Ergänzend dazu werden in den Schriften DE 2558212 A1 und DE 2803754 C2 weitere Zusatzstoffe vorgeschlagen, sowie angeregt, Luft aus der luftdichten Verpackung abzusaugen um günstigere Bedingungen für die Milchsäuregärung (welche anaerob ist) zu schaffen. Optional wird auch vorgeschlagen die Masse einmalig auf Pasteurisierungstemperatur zu erwärmen.

Die Verfahren gemäß den letztgenannten drei Schriften sind zwar kostengünstiger als jene gemäß den zuvor genannten Schriften, aber das Verhältnis aus gewonnener Haltbarkeit zu erhöhten Kosten ist dennoch nicht ausreichend gut um eine breitere wirtschaftliche Anwendung zu ermöglichen.

Von diesem Stand der Technik ausgehend hat sich der Erfinder die Aufgabe gestellt ein Verfahren zur Haltbarmachung jenes Trebers, welcher bei der Bierbrauerei und/oder der Produktion von Bioethanol anfällt, als Futtermittel bereitzustellen. Gegenüber den dazu bekannten Verfahren sollen die Haltbarmachung und die Handhabung vereinfacht sein.

Für das Lösen der Aufgabe wird von den bekannten Merkmalen ausgegangen, dass der Treber durch Pressen entwässert wird, und in einer luftdichten Umhüllung einer Milchsäuregärung unterzogen wird. Als erfindungsgemäße Verbesserung dazu wird vorgeschlagen, den Treber nicht in Form eines Schüttgutes (welches aus viele nicht miteinander verbundenen einzelne Körner besteht) in eine Umhüllung zu füllen, sondern in Form eines kompakten monolithischen Körpers der durch Pressdruck gebildet wurde.

Versuche haben bestätigt, dass durch diese einfach durchführbare Maßnahme gegenüber der früheren Methode die folgenden Vorteile erreichbar sind:
a) Die Milchsäuregärung erfolgt problemloser, weil der monolithische Körper im Gegensatz zum Schüttgut sehr sehr viel weniger Luft enthält, welche die Milchsäuregärung stören oder verhindern kann. Durch die problemlose Milchsäuregärung ist es nicht notwendig irgendwelche Zusätze beizufügen.
b) Der monolithische Körper ist einfacher zu handhaben und zu lagern als das Schüttgut, weil er beispielsweise quaderförmig sein kann, und damit besser dicht an dicht gelegt werden kann, und beim Transport stabiler liegt.
c) Undichtigkeiten der Umhüllung führen nicht zur Zerstörung des Inhalts, weil die Umgebungsluft immer nur mit einen kleinen Oberflächenbereich in Kontakt kommt, und der darunterliegende Volumenbereich nicht durch Umgebungsluft geschädigt wird.
d) Jener kompakte und evtl. schon angeschnittene Futtermittelkörper welcher sich in einer schon zur bestimmungsgemäßen Entnahme geöffneten Verpackung befindet, bleibt länger haltbar, weil er nur oberflächlich mit Umgebungsluft in Kontakt kommt, und der darunterliegende Volumenbereich nicht durch Umgebungsluft geschädigt wird. Wenn ein derartiger angeschnittener Futtermittelkörper über einen längeren Zeitraum verfüttert wird, muss schlimmstenfalls manchmal maximal eine Oberflächenschicht abgetragen und entsorgt werden.

Bevorzugt erfolgt der Vorgang des Pressens von Treber zwecks Umwandlung von einem nassen, breiigen Schüttgut zu einem trockeneren kompakten Körper durch eine diskontinuierlich arbeitende Presse, welche einen Formhohlraum und eine oder mehrere bewegliche Pressenplatten aufweist, wobei die Pressenplatten Begrenzungsfläche des Hohlraums sind, welche von einer geöffneten Ausgangslage aus in Richtung auf gegenüberliegende Begrenzungswände des Formhohlraums hin beweglich sind, wobei Begrenzungswände des Formhohlraums einen Raster von Durchbrüchen aufweisen, durch welche hindurch Flüssigkeit, welche aus dem nassen Treber ausgepresst wird, aus dem Formhohlraum abfließen kann.

Die Erfindung wird an Hand einer Prinzipskizze veranschaulicht.

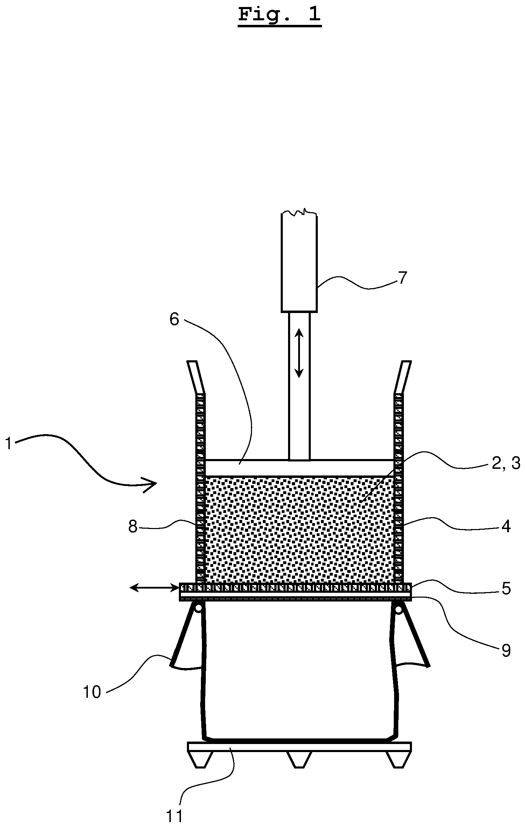

- Fig. 1:: zeigt in seitlicher Teilschnittansicht stark stilisierte beispielhafte Vorrichtung für die Durchführung des erfindungsgemäßen Verfahrens.

Die Vorrichtung gemäß Fig. 1 zeigt eine Presse 1, welche einen Formhohlraum 2 aufweist, in welchem bestimmungsgemäß Treber 3 gepresst wird. Der Formhohlraum ist durch seitliche Begrenzungswände 4 und eine untere (horizontal liegende) Begrenzungswand 5 begrenzt, welche in der durch einen Pfeil dargestellten Richtung verschiebbar ist, sodass damit wahlweise der Formhohlraum 2 nach unten geöffnet bzw. geschlossen werden kann. Weiters weist die Presse 1 eine auch als oben liegende Begrenzungswand dienende Pressenplatte 6 auf, welche durch einen Hydraulikzylinder 7 nach oben und nach unten hin verschiebbar ist, wodurch das Volumen des Formhohlraums 2 verkleinerbar ist. Untere und seitliche Begrenzungswände weisen Durchbrüche 8 auf, durch welche hindurch Flüssigkeit aus dem Formhohlraum 2 austreten kann. Die unter Pressenplatte 6 ist zweischichtig aufgebaut. Die untere, vom Formhohlraum 2 abgewandt liegende Schicht der unteren Begrenzungswand 5 ist als Sammelrinne 9 für die aus dem Formhohlraum 2 austretende Flüssigkeit ausgebildet. Unterhalb der unteren Begrenzungswand 5 ist Raum für leeres Umhüllungsmaterial 10, und eine darunter befindliche Transportpallette 11.

Bestimmungsgemäß wird bei ganz nach oben gehobener Pressenplatte 6 und bei in geschlossener Stellung befindlicher unterer Begrenzungswand 5 der Formhohlraum 2 mit noch auszupressendem nassem Treber 3 gefüllt. Üblicherweise ist der Treber 3 dabei so nass wie er es nach der Verwendung zur Bier- oder Ethanolherstellung ist. Er kann breiige oder sehr nass-krümelige Konsistenz haben. Er kann durch eine Förderband oder eine Förderschnecke oder eine Pumpstrecke zum Formhohlraum 2 bewegt werden. Auch wenn die Pressenplatte 6 nicht gleich von oben her andrückt, kann der Treber etwas Flüssigkeit verlieren, welche durch die Durchbrüche 8 aus dem Formhohlraum 2 austritt.

Im nächsten Schritt wird die Pressenplatte 6 von oben her auf den Treber 3 abgesenkt und an diesen angedrückt, sodass das Volumen des Formhohlraums 3 verkleinert wird, und der Treber 3 komprimiert wird. Dabei wird Wasser aus dem Treber herausgedrückt, welches durch die Durchbrüche 8 abfließt. Typischerweise wird der Treber 3 im Formhohlraum 2 auf 70% bis 60% seines ursprünglichen Volumens komprimiert. Die Erfahrung zeigt, dass bei diesem Komprimieren die einzelnen Granulatkörner des Trebers 3 aneinander zu haften beginnen, sodass der Treber 3 zu einem kompakten monolithischen Körper wird, dessen Form und Größe durch den Kontakt mit den Begrenzungswänden des Formhohlraums 2 definiert sind.

Im nächsten Schritt wird die untere Begrenzungswand 5 zur Seite geschoben, sodass der Formhohlraum 2 nach unten hin offen ist. Daraufhin wird der Treber 3, welcher nun ein kompakter monolithischer Körper ist, nach unten hin aus dem Formhohlraum 2 hinaus bewegt. Dabei gelangt er von oben her in das unterhalb der Presse 2 befindliche Umhüllungsmaterial 10. Falls erforderlich kann die Bewegung des Trebers 3 nach unten hin zusätzlich zur Schwerkraft durch Druck von der Pressenplatte 6 angetrieben werden.

Das Umhüllungsmaterial 10 hat vorzugsweise die Form eines Sackes, dessen Form und Größe genau auf Form und Größe des nun monolithischen Trebers 3 hin bemessen ist. Das Umhüllungsmaterial 10 wird luftdicht geschlossen, und der aus Treber 3 und Umhüllungsmaterial 10 bestehende Körper wird gemeinsam mit der Transportpalette 11, auf welcher er ruht, abtransportiert, beispielsweise mit Hilfe eines Gabelstaplers.

Beispielsweise ist es auch möglich, den monolithischen Treber 3 ohne Umhüllung auf eine Transportpalette 11 zu manövrieren und den Treber 3 in einem Arbeitsgang der an einem anderen Ort aber zeitnah erfolgen muss, mit luftdichter Wickelfolie, wie sie zum Umhüllen von Grünfutter bekannt ist, umhüllen.

Mit dem luftdichten Umhüllen des zu einem monolithischen Körper gepressten Trebers 3 sind die Arbeitsschritte für die Herstellung eines haltbaren Futtermittels auch schon beendet. Wenn der Treber 3 nicht ganz zeitnah verfüttert wird, kommt in ihm Milchsäuregärung in Gang, welche wie bei Grünfutter auch, bestimmungsgemäß die Haltbarkeit verlängert.

Bevorzugt hat der durch Pressen gebildete monolithische Körper aus Treber 3 die Form eines rechtwinkeligen Prismas. Diese Form ist gut handhabbar, liegt stabiler als beispielsweise kreiszylinderartige Gebilde, und lässt sich einfach sehr dicht lagern.

## Patentansprüche

1. Verfahren für Haltbarmachung von Treber (3) als Futtermittel, wobei der Treber (3) aus der Bierproduktion und/oder aus der Produktion von Bioethanol aus Getreide stammt, wobei Wassergehalt des Trebers (3) durch einen Pressvorgang verringert wird und der Treber (3) in einer geschlossenen Umhüllung aus luftdichtem Umhüllungsmaterial (10) einer Milchsäuregärung unterzogen wird,
**dadurch gekennzeichnet, dass**
der Treber (3) in der Form eines kompakten monolithischen Körpers der durch Pressdruck gebildet wurde mit der Umhüllung versehen wird.

2. Verfahren nach Anspruch 1, **dadurch gekennzeichnet, dass** der Pressvorgang durch eine diskontinuierlich arbeitende Presse (1) erfolgt, welche einen Formhohlraum (2) und eine oder mehrere bewegliche Pressenplatten (6) aufweist, welche von einer geöffneten Ausgangslage aus in Richtung auf gegenüberliegende Begrenzungswände (4, 5) des Formhohlraums (2) hin beweglich sind, wobei zumindest eine der Begrenzungswände (4, 5) einen Raster von Durchbrüchen (8) aufweist.

3. Verfahren nach Anspruch 1 oder 2, **dadurch gekennzeichnet, dass** der Treber zu einem monolithische Körper in Form eines rechtwinkeligen Prismas gepresst wird.
